# EUROPEAN PATENT SPECIFICATION

(11) **EP 2 390 752 B1**
(45) Date of publication and mention of the grant of the patent: **18.04.2018**
(21) Application number: 11178545.7
(22) Date of filing: 26.01.2007
(51) Int. Cl.: G05G 1/38, B60K 26/02

(54) **Accelerator Pedal For A Vehicle**
Gaspedal für ein fahrzeug
Pédale d'accélérateur pour véhicule

(30) Priority: 02.02.2006 US 764594 P
(43) Date of publication of application: 30.11.2011
(62) Divisional of application: 07717048.8
(73) Proprietor: CTS Corporation, Elkhart Indiana 46514-1899 (US)
(72) Inventor: Campbell, Andrew, GLASGOW, Strathclyde G75 8SY (GB)
(74) Representative: Loven, Keith James

(56) References cited:
- EP-A1- 1 428 714
- EP-A2- 0 974 886
- DE-A1- 10 135 537
- DE-A1- 19 500 666
- DE-A1- 19 504 971
- DE-A1- 19 536 699
- DE-C1- 19 521 821
- FR-A- 2 138 249
- US-B1- 6 276 229

## Description

### FIELD OF THE INVENTION

This invention relates to a pedal mechanism. In particular, the pedal may be an accelerator pedal in a vehicle.

### BACKGROUND OF THE INVENTION

Automobile accelerator pedals have conventionally been linked to engine fuel subsystems by a cable, generally referred to as a Bowden cable. While accelerator pedal designs vary, the typical return spring and cable friction together create a common and accepted tactile response for automobile drivers. For example, friction between the Bowden cable and its protective sheath otherwise reduce the foot pressure required from the driver to hold a given throttle position. Likewise, friction prevents road bumps felt by the driver from immediately affecting throttle position.

Efforts are underway to replace the mechanical cable-driven throttle systems with a more fully electronic, sensor-driven approach. With the fully electronic approach, the position of the accelerator pedal is read with a position sensor and a corresponding position signal is made available for throttle control. A sensor-based approach is especially compatible with electronic control systems in which accelerator pedal position is one of several variables used for engine control.

Although such drive-by-wire configurations are technically practical, drivers generally prefer the feel, i.e., the tactile response, of conventional cable-driven throttle systems. Designers have therefore attempted to address this preference with mechanisms for emulating the tactile response of cable-driven accelerator pedals. For example, U.S. Patent No. 6,360,631 Wortmann et al. is directed to an accelerator pedal with a plunger subassembly for providing a hysteresis effect.

In this regard, prior art systems are either too costly or inadequately emulate the tactile response of conventional accelerator pedals. Thus, there continues to be a need for a cost-effective, electronic accelerator pedal assembly having the feel of cable-based systems.

DE19504971 (VDO SCHINDLING) discloses a further attempt to emulate the feel of cable-based systems. This document discloses a vehicle pedal connected at one end to a rotatable housing having first and second levers and a contact surface.

A first lever extends from the housing and pushes against a bias spring when the vehicle pedal is depressed. The bias spring is attached to a separate lever, having its own axis of rotation, to which a brake pad is attached. When the bias spring is compressed, the lever rotates slightly around its axis to move the brake pad into contact with the contact surface on the housing. The friction provided between the brake pad and the contact surface means that a driver can maintain a pedal position with less force than is required to depress the vehicle pedal.

The main limitation to this arrangement of pedal is that it would require substantial force to depress the vehicle pedal beyond the point where the brake pad engages the contact surface. The friction encountered would make this arrangement of vehicle pedal somewhat difficult to operate and would not accurately emulate the tactile response encountered in a typical cable-based system.

### SUMMARY

In one embodiment, the present invention provides a pedal assembly comprising: a housing including a pair of side walls defining a pedal arm having a first end and a second end, the first end having a rotatable drum that defines a braking surface, the pedal arm being rotatably mounted to the housing; a first lever extending from the first end; a kickdown clip in the housing; a kickdown lever extending from the first end of the pedal arm into the cavity of the housing and adapted to engage against the kickdown clip; a brake pad located in the cavity of the housing and having a contact surface that is substantially complementary to the braking surface, the brake pad being adapted to be engaged with the braking surface; and a bias spring device operably situated between the first lever and the brake pad for urging the contact surface of the brake pad into frictional engagement with the braking surface of the drum,:
the brake pad being provided with opposed trunnions that define a primary axis and the pair of side walls of the housing define opposed slots, the respective trunnions being supported in the respective slots; and characterised in that the bias spring device is operably situated in the cavity of the housing between the rotatable drum of the pedal arm and the kickdown device.

These and other objects, features and advantages will become more apparent in light of the text, drawings and claims.

### BRIEF DESCRIPTION OF THE DRAWINGS

FIG. 1 is an assembled isometric view of the accelerator pedal assembly of the present invention.
FIG. 2 is another assembled isometric view of the accelerator pedal assembly of the present invention.
FIG. 3 is an exploded isometric view of the accelerator pedal assembly of FIG. 1.
FIG. 4 is another exploded isometric view of the accelerator pedal assembly of FIG. 1.
FIG. 5 is an enlarged cross-sectional view of the accelerator pedal assembly of FIG. 1 showing details of the braking surface.
FIG. 6 is an enlarged cross-sectional view of the accelerator pedal assembly of FIG. 1 showing details of the braking surface and brake pad.
FIG. 7 is a cross-sectional view of the accelerator pedal assembly of FIG. 1.
FIG. 8 is an isometric view of the break pad of the accelerator pedal assembly.
FIG. 9 is another isometric view of the break pad of the accelerator pedal assembly.
FIG. 10 is a partial cut-away view of FIG. 1 showing the brake pad mounted in the housing.
FIG. 11 is a partial cut-away view of FIG. 1 showing the brake pad mounted in the housing.
FIG. 12 is an isometric view of the pedal arm, brake pad and spring.
FIG. 13 is a partial cut-away view of FIG. 1 showing the kickdown lever.
FIG. 14 is a force diagram demonstrating the tactile response of the accelerator pedal according to the present invention.

### DETAILED DESCRIPTION

While this invention is susceptible to embodiment in many different forms, this specification and the accompanying drawings disclose several forms as examples of the invention. The invention is not intended to be limited to the embodiments so described, however. The scope of the invention is identified in the appended claims.

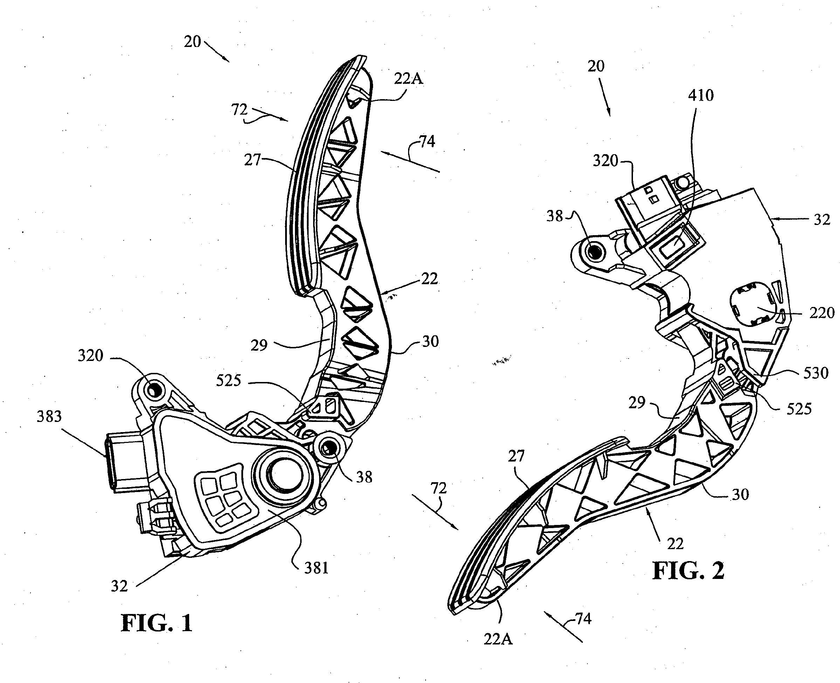

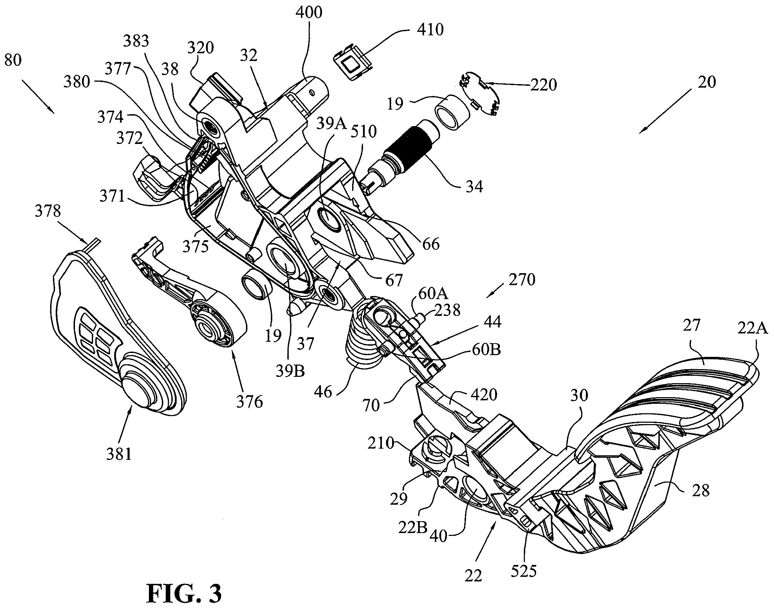

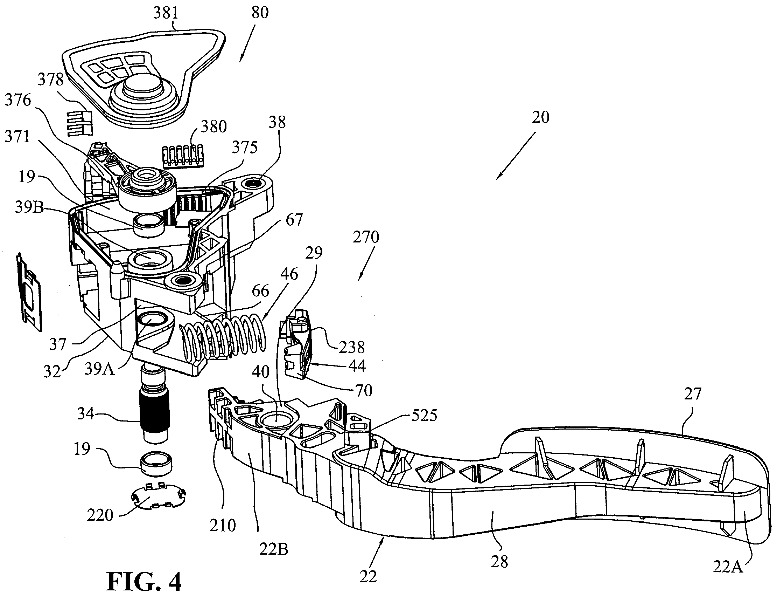

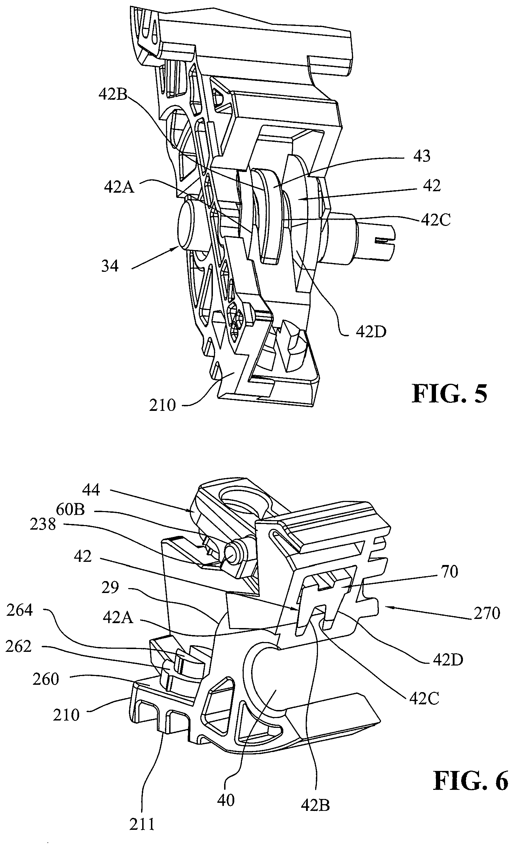

Referring to FIGS. 1-4, a non-contacting accelerator pedal assembly 20 according to the present invention includes a housing 32, a pedal arm 22 rotatably mounted to housing 32, a brake pad 44 and a bias spring device 46. The labels "pedal beam" or "pedal lever" also apply to pedal arm 22. Likewise, brake pad 44 may be referred to as a "body" or "braking lever." Pedal arm 22 has ends 22A and 22B. A footpad 27 is located toward end 22A. Pedal arm end 22B has a drum portion 29 that presents a curved, W-shaped braking (or drag) surface 42 (best seen in FIGS. 5 and 6). Drum portion 29 also has a raised center ridge 43. A lever 210 extends from pedal arm end 22B adjacent to drum portion 29.

Housing 32 has a sensor section 82 and a friction mechanism section 37. A sensor 80 is mounted in sensor section 82 and a friction generating mechanism 270 is mounted in friction mechanism section 37.

Pedal arm 22 has a forward side 28 nearer the front of the car and a rearward side 30 nearer the driver and rear of the car. Footpad 27 may be integral with the pedal lever 22 or articulating and rotating at its connection point to pedal lever 22. Pedal arm 22 has an aperture 40. Braking surface 42 of accelerator arm 22 includes braking surfaces 42A, 42B, 42C and 42D that define a W-shape. In alternate embodiments, surface 42 can have other shapes.

Pedal arm 22 pivots from housing 32 via an axle connection through drum 29 such that drum 29 and its contact surface 42 rotate as pedal arm 22 is moved. Spring device 46 biases pedal arm 22 towards the idle position. Brake pad 44 is positioned to receive spring device 46 at one end and contact drum 29 at the other end. Brake pad 44 is pivotally mounted to housing 32 such that a contact surface 70 is urged against braking surface 42 as pedal arm 22 is depressed.

Pedal arm 22 is coupled to a sensor assembly 80 in sensor section 82 for creating a signal representative of pedal displacement. Sensor assembly 80 can be a contacting variable resistance position sensor. Other sensors could also be used such as optical, mechanical, electrical, magnetic and chemical means.

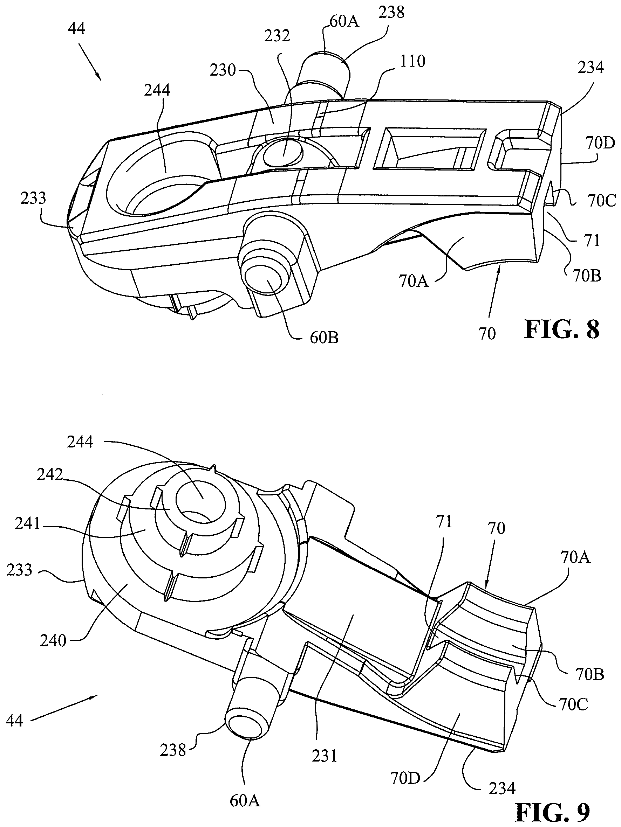

In an embodiment as illustrated, housing 32 also serves as a base for the mounted end 22B of pedal arm 22 and for sensor 80. Proximal end 22B of pedal arm 22 is pivotally secured to housing 32 with an axle 34. More specifically, drum portion 29 of pedal arm 22 includes an opening 40 for receiving axle 34, while housing 32 has a friction generating cavity or section 37 with corresponding openings 39A and 39B also for receiving axle 34. Axle 34 may be press fit into opening 40. Axle 34 is narrowed at its ends where it is collared and supported by bearing journals 19 that are mounted in openings 39A and 39B. A cover 220 is mounted to housing 32 and covers one end of axle 34 and bearing 19. Turning now to FIGS. 8 and 9, in addition to contact surface 70, the other features of brake pad 44 include a top 230, a bottom 231 a button 232, a ridge 110 and ends 233 and 234.

Contact surface 70 is W-shaped and is located at end 234. Contact surface 70 includes contact surfaces 70A, 70B, 70C and 70D that define a W-shape. In alternate embodiments, contact surface 70 can have other shapes. Contact surfaces 70A-D mate with braking surfaces 42A-D to form a friction generating mechanism 270.

Brake pad 44 also has opposed trunnions 60A and 60B (also called outriggers or flanges) to define a primary pivot axis 238 positioned between spring device 46 and contact surface 70. Contact surface 70 of brake pad 44 is situated on one side of this pivot axis and a donut-shaped socket 104 for receiving one end of bias spring 46 is provided on the other side.

Brake pad 44 has stepped flanges 240, 241 and 242 located toward end 233. An aperture 233 passes through flange 242. Bias spring device 46 includes bias springs 46A and 46B. Spring 46A is larger in diameter than spring 46B. Springs 46A and 46B are co-axial with spring 46B being located inside spring 46A. Springs 46A and 46B provide redundancy in case one of the springs fails, another is able to operate. One end of spring 46A goes over flange 241 and rests on flange 240. One end of spring 46B goes over flange 242 and rests on flange 241.

Contact surface 70 is substantially complementary to braking surface 42. In one embodiment, contact surface 70 is curved and W-shaped with a substantially constant radius of curvature. In alternate embodiments, braking surface has a varying radius of curvature and other shapes. The frictional engagement between contact surface 70 and braking surface 42 may tend to wear either surface. The shape of contact surface 42 may be adapted to reduce or accommodate wear.

Referring now to FIGS. 1-7, housing 32 is provided with spaced slots 66 for slidably receiving the trunnions 60A and 60B. Trunnions 60A and 60B are substantially cylindrical in shape. Brake pad 44 pivots on trunnions 60A and 60B in slots 66 and 67.

With brake pad 44 mounted in trunnions 60A and 60B, ridge 110 may contact a portion 248 of housing 32 in cavity 37. Ridge 110 and portion 248 may form a secondary pivot axis 250 on which brake pad 44 may pivot or rock.

Pedal arm 22 includes a lever 210 that extends from pedal arm end 22B. Lever 210 includes a bottom 211, a flat base portion 260, a rounded flange 262 and another rounded flange 264. One end of spring 46A rests on base portion 260 and one end of spring 46B rests on flange 262. Therefore, bias spring device 46 is situated between lever 210 and brake pad 44. Spring device 46 includes two redundant coil springs 46A and 46B in a concentric orientation, one spring nestled within the other. This redundancy is provided for improved reliability, allowing one spring to fail or flag without disrupting the biasing function. It is useful to have redundant springs and for each spring to be capable - on its own - of returning the pedal lever 22 to its idle position.

As pedal arm 22 is moved in a first direction 72 (accelerate) or the other direction 74 (decelerate), the force Fₛ within compression spring 46 increases or decreases, respectively. Brake pad 44 is moveable in response to the spring force Fₛ.

As pedal arm 22 moves towards the idle/decelerate position (direction 74), the resulting drag between braking surface 42 and contact surface 70 urges brake pad 44 towards a position in which trunnions 60A and 60B move slightly outward in slots 66 and 67. This change in position of brake pad 44 may not be visibly detectable. As pedal arm 22 is depressed (direction 72), the drag between braking surface 42 and contact surface 70 draws brake pad 44 further into cavity portion 37 and causes trunnions 60A and 60B to move slightly inward in slots 66 and 67. The sliding motion of brake pad 44 is gradual and can be described as a "wedging" effect that either increases or decreases the force urging contact surface 70 into braking surface 42. This directionally dependent hysteresis is desirable in that it approximates the feel of a conventional mechanically-linked accelerator pedal.

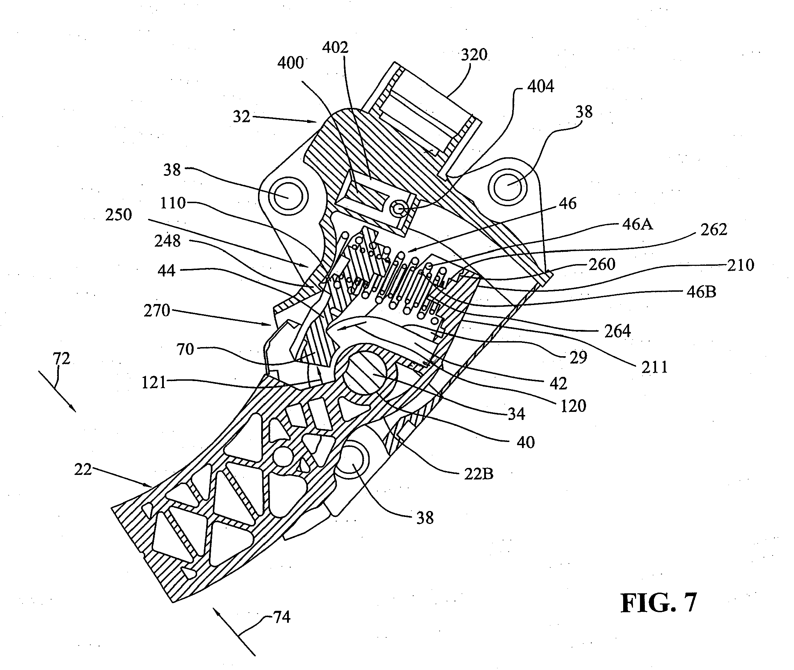

When pedal force on arm 22 is increased, brake pad 44 is urged inwardly on slots 66 and 67 by the frictional force created on contact surface 70 as braking surface 42 rotates forward (direction 120 in FIG. 7). This urging forward of brake pad 44 likewise urges trunnions 60A and 60B into slots 66 and 67, such that the normal, contact force of contact surface 70 into braking surface 42 is relatively reduced.

It is noted that the W-shape of braking surface 42 and contact surface 70 provides a larger area to generate increased friction over than just a simple straight surface.

When pedal force on arm 22 is reduced, the opposite effect is present: the frictional, drag force between 44 and braking surface 42 urges brake pad 44 outward from slots 60A and 60B (direction 121 in FIG. 7). This urging backward of brake pad 44 urges trunnions 60A and 60B outward from slots 60A and 60B such that the normal-direction, contact force between braking surface 42 and contact surface 70 is relatively increased. The relatively higher contact force present as the pedal force on arm 22 decreases allows a driver to hold a given throttle position with less pedal force than is required to move the pedal arm for acceleration.

Also for improved reliability, brake pad 44 is provided with redundant pivoting (or rocking) structures. In addition to the primary pivot axis 238 defined by trunnions 60A and 60B, brake pad 44 defines a ridge 110, which forms a secondary pivot axis 250.

When assembled, ridge 110 is juxtaposed to portion 248 and may form a secondary pivot axis 250 on which brake pad 44 may pivot or rock. The secondary pivot axis provided by ridge 110 and portion 248 is a feature of accelerator pedals according to the present invention to allow for failure of the structural elements that provide the primary pivot axis, namely trunnions 60A and 60B and slots 66 and 67. Should the structure of these features be compromised, the pivoting action of brake pad 44 can occur at ridge 110.

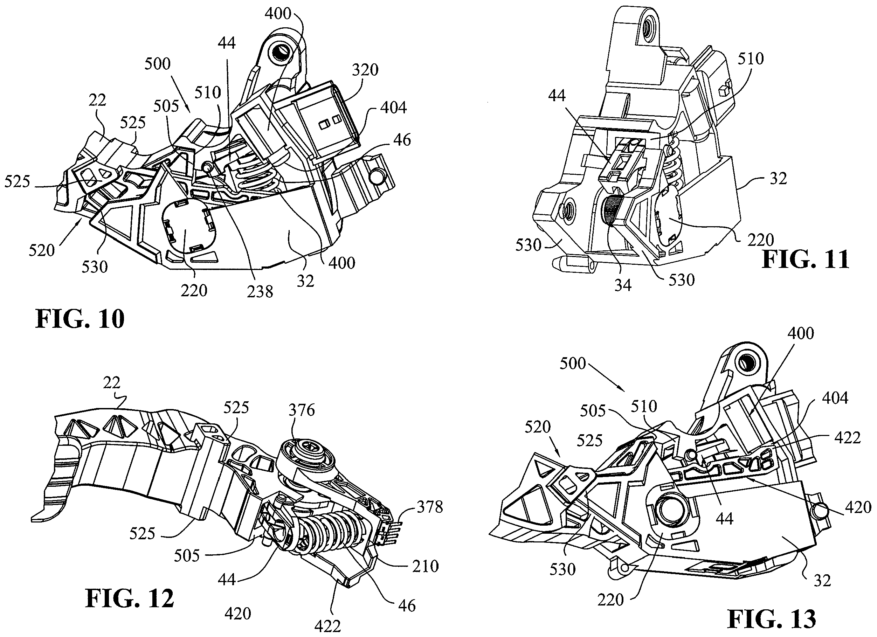

With reference to FIGS. 10-13, pedal arm 22 has predetermined rotational limits in the form of an idle, return position stop 500 and a depressed, open-throttle position stop 520. Open throttle position stop 520 comprises pedal arm posts 525 that extend out from each side of pedal arm 22 and stop walls 530 on housing 32. When pedal arm 22 is fully depressed, pedal arm posts 525 come to rest against stop walls 530, thereby limiting forward movement of pedal arm 22. Stops 500 and 520 may be elastomeric or rigid.

Idle position stop 500 comprises pedal arm wall 505 and housing wall 510. When pedal arm 22 is released, pedal arm wall 505 comes to rest against housing wall 510 and cannot move any further in direction 74 (FIG. 7).

Turning back to FIGS. 1-7, housing 32 is securable to a vehicle wall via fasteners through mounting holes 38. Pedal assemblies according to the present invention are suitable for both firewall mounting or pedal rack mounting by means of an adjustable or non-adjustable position pedal box rack.

Housing 32 also has a sensor section or cavity 82. Sensor assembly 80 can be mounted in sensor section 82. Sensor assembly 80 can include a Kapton flexible film 371 that has resistor tracks 372 and conductor tracks 374. Film 371 is located in sensor cavity 82 and rests against wall 375. One end of film 371 is located in slot 377. Terminals 383 are insert molded into housing 32. The terminals would extend into connector shroud 320 and can be connected with a wire harness. A metal pressure wedge 380 is pressure fit into slot 377 to make electrical connections between conductor tracks 374 and terminals 383. A rotor 376 is pressure fit over shaft 34. Rotor 376 has contactors or wipers 378 attached to one end of the rotor. A sensor cover 381 is ultrasonically welded to housing 32 to seal sensor cavity 82. In operation rotor 376 moves as shaft 34 does. Shaft 34 is connected to pedal arm 22. Movement of pedal arm 22 causes rotor 376 and contactors 378 to move along resistor tracks 372 and conductor tracks 374. As the contactors 378 move, a voltage applied to the terminals will change magnitude. This is called an electrical output signal and is indicative of the position of pedal arm 22. Additional details on the operation and construction of sensor assembly 80 are detailed in United States Patent numbers 5,416,295 and 6,474,191.

When a vehicle operator presses on pedal arm 22, shaft 326 rotates. As shaft 326 rotates, rotor 376 turns which causes the wipers 378 to move along the resistor tracks 372 and conductor tracks 374 which causes the electrical output signal to change as a function of the pedal position.

A wire harness (not shown) would be mounted to connector shroud 320 and connect with terminals 383. The wire harness typically connects with an engine control computer. The engine control computer controls an electric motor attached to a throttle plate mounted on the intake of the engine. In this manner, the pedal assembly is able to control the throttle setting on the engine electronically or through a wire. Systems of this type are called drive-by-wire systems.

Housing 32 can further have a kickdown clip opening or cavity 402 located on the side of housing 32. A kickdown clip 400 can be mounted inside of and be retained by cavity 402. Kickdown clip 400 can include a projecting button 404. Pedal arm 22 may also include a kickdown lever 422 that has a flat wall portion 422. Kickdown lever 422 extends from lever 210 along one side of spring 46.

Additional details on the operation and construction of kickdown clip 400 are detailed in United States Patent Number 6,418,813, entitled, "Kickdown Mechanism for a Pedal".

When the pedal arm 22 is near a point of maximum depression, flat wall portion 422 presses on and engages button 404 of kickdown clip 400. Extra force is then required to be applied to pedal arm 22 to cause button 404 to move inwardly into kickdown clip 400. The kickdown clip provides a tactile feedback to the pedal operator that the pedal is at a maximum point of depression. The maximum point of pedal depression can correspond to a wide open engine throttle position or can be used to indicate a downshift point for an automatic transmission.

When a pedal operator lifts his foot from footpad 27, the loaded bias spring device 46 causes pedal arm 22 to rotate about axle 34 back to the original starting position. This position corresponds to an idle engine throttle position.

When footpad 27 is depressed, an increasing normal force F_{N} is exerted by the contact surface 70 against braking surface 42. A friction force F_{f} between the surface 70 and surface 42 is defined by the coefficient of dynamic friction multiplied by normal force F_{N}. As the normal force F_{N} increases with increasing applied force Fₐ at footpad 27, the friction force F_{f} accordingly increases. The driver feels this increase in his/her foot at footpad 27. Friction force F_{f} runs in one of two directions along face 70 depending on whether the pedal lever is pushed forward 72 or rearward 74. The friction force F_{f} opposes the applied force Fₐ as the pedal is being depressed and subtracts from the spring force Fₛ as the pedal is being returned toward its idle position.

The pedal assembly 20 of the present invention can have a directionally dependent actuation-force hysteresis. Initially a larger amount of force may be required to start movement of pedal arm 22. A smaller amount of force may then be needed to keep moving pedal arm 22.

Pedal assembly 20 may further have a no-movement zone that allows the driver to reduce foot pedal force while still holding the same accelerator pedal position.

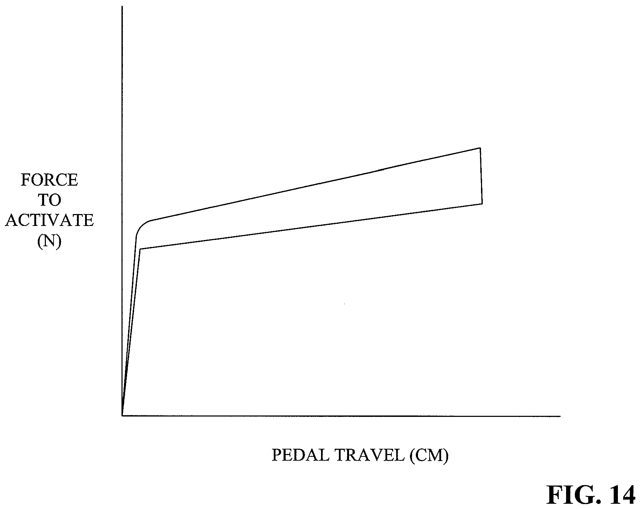

FIG. 14 shows a graph of force versus pedal arm travel demonstrating the directionally dependent actuation-force hysteresis provided by accelerator pedal assembly 20 of the present invention. In an embodiment, pedal force can be reduced 40 to 50 percent before pedal arm 22 begins to move towards an idle position.

Numerous variations and modifications of the embodiments described above may be effected without departing from the scope of the claims.

## Claims

1. A pedal assembly comprising: a housing (32) including a pair of side walls defining a cavity;
a pedal arm (22) having a first end (22B) and a second end (22A), the first end (22B) having a rotatable drum (29) that defines a braking surface (42), the pedal arm (22) being rotatably mounted to the housing (32); a first lever (210) extending from the first end (22B); a kickdown clip (400) in the housing (32); a kickdown lever (420) extending from the first end (22B) of the pedal arm (22) into the cavity of the housing (32) and adapted to engage against the kickdown clip (400); a brake pad (44) located in the cavity of the housing (32) and having a contact surface (70) that is substantially complementary to the braking surface (42), the brake pad (44) being adapted to be engaged with the braking surface; and a bias spring device (46) operably situated between the first lever and the brake pad for urging the contact surface of the brake pad into frictional engagement with the braking surface of the drum (29),
the brake pad (44) being provided with opposed trunnions (60A, 60B) that define a primary axis (238) and the pair of side walls of the housing (32) define opposed slots (66, 67), the respective trunnions (60A, 60B) being supported in the respective slots (66, 67); and **characterised in that** the bias spring device (46) is located and operably situated in the cavity of the housing (32) between the rotatable drum (29) of the pedal arm (22) and the kickdown clip (400).

2. A pedal assembly in accordance with Claim 1, wherein the contact surface (70) is substantially W-shaped.

3. A pedal assembly in accordance with Claim 1, wherein the braking surface (42) is substantially W-shaped.

4. A pedal assembly in accordance with Claim 1, wherein a sensor (80) is connected to the pedal arm (22).

## Patentansprüche

1. Pedalanordnung, umfassend: ein Gehäuse (32) mit einem Paar von Seitenwänden, die eine Aussparung begrenzen; einen Pedalarm (22), der ein erstes Ende (22B) und ein zweites Ende (22A) aufweist, wobei das erste Ende (22B) eine drehbare Trommel (29) aufweist, die eine Bremsfläche (42) ausbildet, wobei der Pedalarm (22) drehbar an dem Gehäuse (32) angebracht ist; einen ersten Hebel (210), der sich von dem ersten Ende (22B) erstreckt; einen Kickdownclip (400) in dem Gehäuse (32); einen Kickdownhebel (420) der sich von dem ersten Ende (22B) des Pedalarms (22) in den Hohlraum erstreckt und derart ausgebildet ist, um mit dem Kickdownclip (400) in Eingriff zu gelangen; einen Bremsklotz (44), der in der Aussparung des Gehäuses (32) angeordnet ist und eine Kontaktfläche (70) aufweist, die im Wesentlichen komplementär zu der Bremsfläche (42) ist, wobei der Bremsklotz (44) derart ausgebildet ist, um mit der Bremsfläche in Eingriff zu gelangen; und eine Vorspannfedereinrichtung (46), die betriebsmäßig zwischen dem ersten Hebel und dem Bremsklotz angeordnet ist, um die Kontaktfläche des Bremsklotzes in Reibungseingriff mit der Bremsfläche der Trommel (29) zu drücken, wobei der Bremsklotz (44) mit gegenüberliegenden Zapfen (60A, 60B) versehen ist, welche eine Hauptachse (238) bilden und das Paar von Seitenwänden des Gehäuses (32) gegenüberliegende Schlitze (66, 67) vorgibt, wobei die jeweiligen Zapfen (60A, 60B) in den jeweiligen Schlitzen (66, 67) gelagert sind, und **dadurch gekennzeichnet, dass** die Vorspannfedereinrichtung (46) in der Aussparung des Gehäuses (32) zwischen der drehbaren Trommel (29) des Pedalarms (22) und dem Kickdownclip (400) angeordnet und betriebsmäßig gelegen ist.

2. Pedalanordnung nach Anspruch 1, bei der die Kontaktfläche (70) im Wesentlichen W-förmig ist.

3. Pedalanordnung nach Anspruch 1, bei der die Bremsfläche (42) im Wesentlichen W-förmig ist.

4. Pedalanordnung nach Anspruch 1, bei der ein Sensor (80) mit dem Pedalarm (22) verbunden ist.

## Revendications

1. - Ensemble pédale comprenant : un logement (32) comprenant une paire de parois latérales définissant une cavité ;
un bras de pédale (22) ayant une première extrémité (22B) et une seconde extrémité (22A), la première extrémité (22B) ayant un tambour rotatif (29) qui définit une surface de freinage (42), le bras de pédale (22) étant monté de manière rotative sur le logement (32) ; un premier levier (210) s'étendant à partir de la première extrémité (22B) ; une attache de rétrogradation forcée (400) dans le logement (32) ; un levier de rétrogradation forcée (420) s'étendant à partir de la première extrémité (22B) du bras de pédale (22) dans la cavité du logement (32) et adapté pour s'engager contre l'attache de rétrogradation forcée (400) ; une garniture de frein (44) située dans la cavité du logement (32) et ayant une surface de contact (70) qui est sensiblement complémentaire de la surface de freinage (42), la garniture de frein (44) étant adaptée pour être engagée avec la surface de freinage ; et un dispositif de ressort de sollicitation (46) situé de manière fonctionnelle entre le premier levier et la garniture de frein pour pousser la surface de contact de la garniture de frein en engagement par frottement avec la surface de freinage du tambour (29),
la garniture de frein (44) comportant des tourillons opposés (60A, 60B) qui définissent un axe principal (238) et la paire de parois latérales du logement (32) définissant des fentes opposées (66, 67), les tourillons respectifs (60A, 60B) étant supportés dans les fentes respectives (66, 67) ; et **caractérisé par le fait que** le dispositif de ressort de sollicitation (46) est placé et situé de manière fonctionnelle dans la cavité du logement (32) entre le tambour rotatif (29) du bras de pédale (22) et l'attache de rétrogradation forcée (400).

2. - Ensemble pédale selon la revendication 1, dans lequel la surface de contact (70) est sensiblement en forme de W.

3. - Ensemble pédale selon la revendication 1, dans lequel la surface de freinage (42) est sensiblement en forme de W.

4. - Ensemble pédale selon la revendication 1, dans lequel un capteur (80) est relié au bras de pédale (22).
